# EUROPÄISCHE PATENTSCHRIFT

(11) **EP 3 468 937 B1**
(45) Veröffentlichungstag und Bekanntmachung des Hinweises auf die Patenterteilung: **25.11.2020**
(21) Anmeldenummer: 16774934.0
(22) Anmeldetag: 29.09.2016
(51) Int. Cl.: C04B 28/14

(54) **GIPS-ZEMENT-TROCKENMISCHUNG UND DARAUS HERGESTELLTE GEBÄUDEFERTIGTEILE**
GYPSUM-CEMENT DRY MIX AND PREFABRICATED CONSTRUCTION PARTS PRODUCED THEREFROM
MÉLANGE SEC DE CIMENT CONTENANT DU GYPSE ET ÉLÉMENTS DE CONSTRUCTION PRÉFABRIQUÉS

(30) Priorität: 29.09.2015 DE 102015218759
(43) Veröffentlichungstag der Anmeldung: 17.04.2019
(73) Patentinhaber: Eck, Bernd Bruno Wilfried, 29680 Estepona/Malaga (ES); Lichtinger, Hubert, 29680 Estepona/Malaga (ES)
(72) Erfinder: Eck, Bernd Bruno Wilfried, 29680 Estepona/Malaga (ES); Lichtinger, Hubert, 29680 Estepona/Malaga (ES)
(74) Vertreter: Schlingmeier, Nadja
(86) Internationale Anmeldenummer: PCT/EP2016/073211
(87) Internationale Veröffentlichungsnummer: WO 2017/055413

(56) Entgegenhaltungen:
- EP-A1- 0 769 482
- US-A- 5 401 538
- US-A- 6 162 288
- US-A1- 2003 125 404
- US-A1- 2008 302 276

## Beschreibung

Die Erfindung betrifft eine Gips-Zement-Trockenmischung und daraus hergestellte Gebäudefertigteile.

Zur Errichtung von Stahlbauwerken wird üblicherweise eine dicke Beschichtung anorganischen Materials auf die metallischen Bauwerkselemente aufgetragen, wobei meist eine auf der Stahloberfläche abbindende wässrige Mischung gespritzt wird.

Aus DE 37 80 674 T2 ist eine spritzbare feuerfestmachende Zusammensetzung bekannt, die ein hydratisierbares Zement-Bindemittel, einen Zuschlagstoff aus zerkleinertem Polystyrol, einen Luftporenbildner und eine Faserkomponente enthält, die auf ein Stahlkonstruktionsteil aufgespritzt werden kann, und dort haftet und abbindet.

Nachteilig kann die Mischung nach DE 37 80 674 T2 nicht in Verbindung mit Gips eingesetzt werden, da das gelöste CaSO₄ im Zement das gefürchtete Sulfattreiben durch Bildung neuer Mineralverbindungen, z.B. Thaumasit, Syngenit, Ettringit, auslösen kann. Aus diesem Grund ist die Mischung schwer verarbeitbar und das ausgehärtete Material weist ein hohes Gewicht auf.

Eine Mischung von Zement und Gips würde nachweislich zu verbesserten Materialeigenschaften führen. Gips und Zement lassen sich allerdings unter herkömmlichen Bedingungen nur schwer in einem Material verarbeiten, da, wie bereits oben erwähnt das Calciumsulfat zu unerwünschten Nebenreaktionen während der Aushärtung des Materials führt. Das Calciumaluminathydrat im Zement reagiert dabei in dem sogenannten "Sulfattreiben" mit Sulfaten und es kann zu einer Volumenvergrößerung von bis zu 300% kommen. Die Folge sind sehr große mechanische Spannungen, die zu Rissen und Abplatzungen führen können.

DE 10 2010 048 339 B8 offenbart eine wässrige Gips-Zement-Mischung, die ein Bindemittel aus Gips und Zement, einen Zuschlagstoff aus Sand oder Schaumstoff, ein Fließmittel mit Luftporenbildner gemischt, einen Verzögerer und Wasser enthält. Diese wässrige Mischung kann auf Stahlträger aufgespritzt werden, härtet darauf aus und kann zur Herstellung von Gebäuden verwendet werden. Da die Mischung im Spritzverfahren aufgetragen wird, ist allerdings nachteilig eine bestimmte Viskosität nötig, die das Pumpen und Aufspritzen der Mischung ermöglicht. Ein weiterer Nachteil dieser wässrigen Mischung besteht darin, dass lediglich Bindemittel, Zuschlagmittel und Fasern trocken vorgemischt und trocken abgepackt werden können. Fließmittel, Verzögerer und Luftporenbildner müssen nachträglich zur Herstellung der spritzfähigen Masse, beispielsweise über eine Dosieranlage, in wässriger Lösung exakt hinzu dosiert werden, was die Verarbeitung mit erheblich erhöhtem Aufwand verbindet. Als besonders problematisch erweist sich dabei die genaue Dosierung des Verzögerers, bevorzugt Zitronensäure, der in Pulverform angeliefert und direkt auf der Baustelle dem Anmachwasser beigemischt wird. Da die Dosierung stark von den klimatischen Bedingungen abhängt und da große Mengen an Zitronensäure nötig sind, um eine längere Verarbeitungszeit zu erzielen, kommt es leicht zu Überdosierungen, die auf Grund des sauren pH-Werts der wässrigen Mischung nachteilig zur Korrosion der verzinkten Oberfläche der Stahlkonstruktion führt. Besonders nachteilig erweist sich auch, dass viele Luftporen in der wässrigen Mischung durch den hohen Druck während des Aufspritzverfahrens zerstört werden. Auch der Anteil an dem Zuschlagmittel EPS (expandiertes Polystyrol) pro Kubikmeter der Mischung vermindert sich durch den hohen Druck, mit dem die Mischung aufgespritzt wird. Das führt wiederum zu einem höheren Bedarf an Material, wobei sich der Gewichtsanteil des Bindemittels um bis zu 10% des vorher berechneten Bedarfs erhöhen kann.

US 5 401 538 A offenbart eine sprühbare Zusammensetzung zur Herstellung einer feuerfest machenden Masse, die ein Trockengemisch aus 30-90 Gew.% Portlandzement und 4-30 Gew.% Gips, einen Zuschlagstoff (expandiertes Polystyrol), 0,2 bis 2 % Luftporenbildner (Natriumlaurylsulfat) und 0 bis 1% Verzögerer und bis zu 3 % Aluminiumsulfat als Beschleuniger enthält.

Aufgabe der Erfindung ist es, eine Gips-Zement-Trockenmischung bereitzustellen, die alle Bestandteile, inklusive der Additive bereits im trockenen Zustand vorgemischt enthält, sodass vor Ort lediglich Wasser zugemischt werden muss. Die Mischung sollte einfach zu verarbeiten sein, schnell aushärten, und im ausgehärteten Zustand ein geringes Gewicht aufweisen und die einfache Herstellung von Gebäudefertigteilen ermöglichen.

Gelöst wird die Aufgabe durch eine neuartige Gips-Zement-Trockenmischung umfassend
- ein Bindemittel, das Calciumsulfat-Hemihydrat oder ein dieses zu mindestens 50 Gew.-% umfassendes Gemisch und einen hydraulischen Zement in einem Gewichtsverhältnis 5:1 bis 3:1 enthält,
- einen Zuschlagstoff, der ausgewählt ist aus zerkleinertem Holz, Plastik, Blähton, Perliten oder einem Schaumstoff oder einer Mischung dieser,
- Additive, enthaltend
   - mindestens ein Fließmittel
   - mindestens einen Luftporenbildner
   - mindestens einen Stabilisator
   - mindestens einen Verzögerer/Beschleuniger
wobei die Additive in trockener Form vorliegen und der Massenanteil der Summe aller Additive an der Gesamtmasse der Trockenmischung <1% beträgt, wobei der Stabilisator ausgewählt ist aus Fluorphosphaten oder kondensierten Phosphaten, wobei der Verzögerer/Beschleuniger ein wasserlösliches anionisches Polymer ist und wobei das Massenverhältnis Stabilisator zu Verzögerer/Beschleuniger 3:1 bis 1:3 beträgt.

In einer vorteilhaften Ausgestaltung umfasst die Gips-Zement-Trockenmischung ein Bindemittel, das Calciumsulfat-Hemihydrat oder ein dieses zu mindestens 50 Gew.-% umfassendes Gemisch und einen hydraulischen Zement in einem Gewichtsverhältnis 5:1 bis 3:1 enthält,
- einen Zuschlagstoff, der ausgewählt ist aus zerkleinertem Holz, Plastik, Blähton, Perliten oder einem Schaumstoff oder einer Mischung dieser
- Additive, enthaltend
   - ein Fließmittel
   - einen Luftporenbildner
   - einen Stabilisator
   - einen Verzögerer/Beschleuniger
wobei die Additive in trockener Form vorliegen und der Massenanteil der Summe aller Additive an der Gesamtmasse der Trockenmischung <1% beträgt, wobei der Stabilisator ausgewählt ist aus Fluorphosphaten oder kondensierten Phosphaten, wobei der Verzögerer/Beschleuniger ein wasserlösliches anionisches Polymer ist und wobei das Massenverhältnis Stabilisator zu Verzögerer/Beschleuniger 3:1 bis 1:3 beträgt.

Verzögerer/Beschleuniger bezeichnet im Sinne der Erfindung einen Zusatz, der sowohl als Verzögerer als auch als Beschleuniger wirkt.

Erfindungsgemäß liegen alle Bestandteile der Gips-Zement-Mischung in trockenem Zustand vor. Die komplette Mischung ist in trockenem Zustand abgepackt lager- und transportierfähig. Hohe Transportkosten, verursacht durch zusätzliches Gewicht der flüssigen Bestandteile, werden durch die erfindungsgemäße Gips-Zement-Trockenmischung vermieden.

Erfindungsgemäß umfasst die Gips-Zement-Trockenmischung ein Bindemittel enthaltend Gips (Calciumsulfat-Hemihydrat) oder ein dieses zu mindestens 55% umfassendes Gemisch und einen hydraulischen Zement in einem Gewichtsverhältnis von 3:1 bis 5:1, bevorzugt .4:1 bis 5:1.

Calciumsulfat-Hemihydrat (CaSO₄·1/2H₂O) wird bekanntlich durch Brennen aus Calciumsulfat-Dihydrat hergestellt. Je nach Reinheit des Ausgangs-Calciumsulfat-Dihydrats enthält das erfindungsgemäß in der Erfindung verwendete Calciumsulfat-Hemihydrat bis zu 45 Gew.-% inerte Verunreinigungen.
Calciumsulfat-Hemihydrat kann in zwei Modifikationen, alpha-Hemihydrat und beta-Hemihydrat, vorliegen. Beide reagieren mit Wasser unter Rückbildung von Calciumsulfat-Dihydrat (dem eigentlichen Gips). Beide Modifikationen können entweder einzeln oder in Mischung in der Erfindung verwendet werden.

Erfindungsgemäß handelt es sich bei dem Zement um hydraulischen Zement, bevorzugt um Portland- oder Kalksteinzement. Hydraulischer Zement härtet durch chemische Wechselwirkungen mit Wasser aus. Dabei reagieren die Metalloxide im Zement zunächst mit Wasser zu Hydroxiden, die dann kristallisieren und verfilzen. Wichtig ist, dass alle Zementkörner von Wasser umgeben sind, um ein gleichmäßiges Aushärten zu gewährleisten.

Erfindungsgemäß enthält die Gips-Zement-Trockenmischung einen Zuschlagstoff.
Erfindungsgemäß ist der Zuschlagstoff ausgewählt aus zerkleinertem/recyceltem Holz, Plastik, Blähton, Perlite oder einem Schaumstoff oder einer Mischung dieser. Vorteilhaft ist damit eine hohe Variabilität an Zuschlagstoffen möglich, die den entsprechenden Anforderungen an das ausgehärtete Material angepasst werden kann.

Wird als Zuschlagstoff Schaumstoff eingesetzt, kann prinzipiell jeder Schaumstoff eingesetzt werden, also thermoplastische Schäume, wie expandiertes Polystyrol (EPS; bekannteste Marke: Styropor® Polyurethanschaum) expandiertes Polypropylen, (EPP), expandiertes PVC (EPVC), elastomere Schäume, wie Polyurethan(PUR)-Weichschaum und Nitril-Butadien-(NBR)-Schaum, sowie duroplastische Schäume, wie PUR-Hartschaum und Phenol-Formaldehyd(PF)-Schaum.

In einer Ausführungsform ist der Zuschlagstoff Schaumstoff, wobei das Gewichtsverhältnis Bindemittel zu Schaumstoff 15:1 bis 45:1, bevorzugt 35:1 bis 20:1, besonders bevorzugt 30:1 beträgt.

In einer Ausführungsform ist der Schaumstoff recyceltes expandiertes Polystyrol (recycled EPS, Expanded Polystyrene) mit einer mittleren Teilchengrösse von 1 bis 8 mm.

Die erfindungsgemäße Mischung kann ferner zur Verstärkung Polymerfasern aus allen bekannten synthetischen und natürlichen Polymeren enthalten. Bevorzugt werden Polypropylen-Fasern eingesetzt.

Erfindungsgemäß enthält die Gips-Zement-Trockenmischung Additive.

Diese wirken in ihrer Kombination als Vermittler und gewährleisten die Kompatibilität zwischen Gips und Zement. Unerwünschte Nebenreaktionen, wie z.B. das oben erwähnte "Sulfattreiben" werden dadurch vermieden.
Erfindungsgemäß liegen die Additive in trockener Form vor und der Massenanteil der Summe aller Additive an der Gesamtmasse der Trockenmischung beträgt < 1%.

Erfindungsgemäß enthält die Gips-Zement-Trockenmischung als Additiv mindestens ein Fließmittel.

In einer Ausführungsform ist das Fließmittel (in der Fachsprache auch als Superplasticizer bezeichnet) ein organisches Fließmittel.

In einer Ausführungsform enthält das Fließmittel anionische Tenside, z. B. auf der Basis von Lignosulfonat, Melaminsulfonat, Naphthalinsulfonat Poylcarboxylat, Natriumbenzoat, besonders bevorzugt Natriumdodecylsulfat.

In einer Ausführungsform enthält das Fließmittel zusätzlich antibakterielle Mittel.

Erfindungsgemäß umfasst die Gips-Zement-Trockenmischung mindestens einen Luftporenbildner.

In einer Ausführungsform ist der Luftporenbildner so ausgewählt, dass bei Anmischung die Oberflächenspannung der gebildeten Luftporen dem Abbindeprozess standhält und der Luftporenbildner aber gleichzeitig mit den anderen Additiven der Gips-Zement-Mischung kompatibel ist.

Bisher war nur der Einsatz von Fließmittel und Luftporenbildner in wässriger Lösung möglich. Erfindungsgemäß kommt nun vorteilhaft ein Luftporenbildner in trockenem Zustand zum Einsatz, was wiederum die Verarbeitung der Gips-Zement-Mischung wesentlich vereinfacht.

In einer Ausführungsform enthält der Luftporenbildner anionische Tenside.

In einer Ausführungsform sind die anionischen Tenside ausgewählt aus Carboxylaten, Sulfonaten und/oder Sulfaten.

In einer Ausführungsform umfassen die anionischen Tenside Natriumdodecylsulfat.

Wichtig für eine gleichmäßige Abbindung der Gips-Zement-Masse ist eine konstante Feuchtigkeit innerhalb des Materials, da die Kristallisation der Zementbestandteile, als auch des Gips nur mit ausreichend Wasser vonstattengeht. Bisher wurden der Mischung dafür meist Fasern aus Zellstoff beigemischt.

Erfindungsgemäß enthält die Gips-Zement-Trockenmischung als Additive mindestens einen Stabilisator.

In einer Ausführungsform enthält die Gips-Zement Trockenmischung als Additiv einen Stabilisator.

Der Stabilisator kann Wasser speichern und garantiert eine ausreichende Menge an Wasser für die Zementaushärtung und Gipsabbindung innerhalb der Mischung. Vorteilhaft wird dadurch die Verarbeitung der Mischung zu einer Pump- und gießfähigen Masse erleichtert.

Ein weiter entscheidender Vorteil des Zusatzes von Stabilisatoren liegt darin, dass dadurch Risse im Material und unregelmäßige Strukturen innerhalb des Materials, die die Festigkeit herabsetzen, vermieden werden. Gleichzeitig kann aufgrund der Gießfähigkeit und Spritzfähigkeit der angerührten Mischung das vorher berechnete Gewicht des Materials beibehalten werden.
Erfindungsgemäß ist der Stabilisator ausgewählt aus der Stoffklasse der Fluorphosphate oder kondensierten Phosphate.
In einer Ausführungsform ist der Stabilisator ausgewählt aus kondensierten Phosphaten.

Um eine einfache Verarbeitung der Gips-Zement-Trockenmischung zu gewährleisten, ist es wichtig, eine gewisse offene Zeit zu ermöglichen. Dazu wird der Mischung mindestens ein organischer Verzögerer/Beschleuniger beigesetzt.
Erfindungsgemäß enthält die Gips-Zement Trockenmischung als Additiv mindestens einen Verzögerer/Beschleuniger, d.h. einen Zusatz, der sowohl als Verzögerer als auch als Beschleuniger wirkt.

Vorteilhaft wirkt der Verzögerer/Beschleuniger in der ersten Phase des Aushärtungsprozesses verzögernd, während er in der zweiten Phase des Aushärtungsprozesses beschleunigend wirkt. Der Verzögerer/Beschleuniger führt zu einer erheblich verbesserten Handhabung der verarbeiteten Gips-Zement-Trockenmischung, da die für die offene Verarbeitung der Mischung nötige Zeit verlängert wird, der Aushärteprozess dann aber beschleunigt abläuft und somit auch Risse und Spannungen im Material vermieden werden.
Erfindungsgemäß ist der Verzögerer/Beschleuniger ein wasserlösliches, anionisches Polymer.
In einer Ausführungsform ist das anionische, wasserlösliche Polymer ausgewählt aus Polyacrylaten, Polyasparaginsäure, Polysuccinimid, und/oder organischen Phosphaten.

Erfindungsgemäß beträgt der Masseanteil des Verzögerers/Beschleunigers oder, wenn es mehrere verschiedene Verzögerer/Beschleuniger sind, der Summe aller Verzögerer/ Beschleuniger, 0,1 bis 0,5 m% (Masseprozent), besonders bevorzugt 0,2 bis 0,4 m%, ganz besonders bevorzugt 0,3 m% der Gesamtmasse der Trockenmischung.

Mit dem erfindungsgemäßen Verzögerer/Beschleuniger ist nach einer für die Verarbeitung nötigen längeren offenen Zeit eine schnelle Aushärtung des Materials möglich, die wiederum die Bildung von Rissen und Spannungen im Material verhindern kann.

Vorteilhaft bringen die erfindungsgemäß eingesetzten Verzögerer/Beschleuniger den pH Wert der mit Wasser angerührten erfindungsgemäßen Gips-Zement-Trockenmischung nicht in den sauren Bereich. Dadurch wird vorteilhaft gegenüber dem Stand der Technik eine Korrosion von Bewehrungen, insbesondere von Baustählen bzw. Stahlträgern vermindert.

Überraschend hat sich gezeigt, dass die Kombination von erfindungsgemäßen Stabilisator und Verzögerer/Beschleuniger sich besonders vorteilhaft auf die Verarbeitung und Aushärtung der Gips-Zement-Mischung auswirkt.

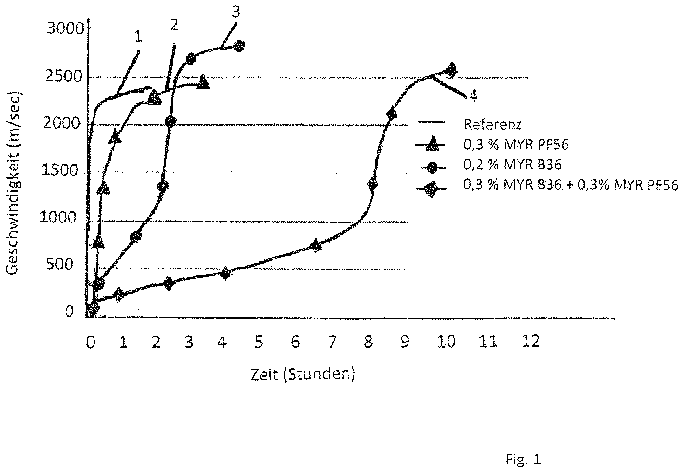

Zur Veranschaulichung ist der zeitliche Verlauf der Aushärtung verschiedener Zusammensetzungen der Trockenmischung graphisch in Fig. 1 dargestellt.

Es zeigen die Graphen einen typischen Verlauf für die Aushärtung der jeweils verarbeiteten Gips-Zement-Trockenmischungen:

| | |
|---|---|
| - Graph 1: | Gips-Zement-Trockenmischung ohne die Zugabe von Additiven, |
| - Graph 2: | Gips-Zement-Trockenmischung enthaltend 0,3 m% Stabilisator *(MYR PF 56,* Fa. Marcusyros S.L., Estepona, Spain, enthaltend Natriumtrimetaphosphat), bezogen auf die Gesamtmasse der Trockenmischung |
| - Graph 3: | Gips-Zement-Trockenmischung enthaltend 0,2 m% Verzögerer/Beschleuniger *(MYR B 36,* Fa. Marcusyros S.L., Estepona, Spain, enthaltend Anionisches Polymer, Schüttdichte 550 kg/m³), bezogen auf die Gesamtmasse der Trockenmischung |
| - Graph 4: | Gips-Zement-Trockenmischung enthaltend eine Kombination aus 0,3 m% Verzögerer/Beschleuniger und 0,3 m% Stabilisator (*MYR B* 36 und *MYR PF 56,* Fa. Marcusyros S.L., Estepona, Spain), bezogen auf die Gesamtmasse der Trockenmischung |

Man sieht, dass der Abbindeprozess bei einer Mischung ohne den Zusatz von Additiven (Graph 1) sofort einsetzt, was eine Verarbeitung extrem erschwert.

Es ist erkennbar, dass der Zusatz der jeweils einzelnen Additive (Graph 2 und 3) schon eine bessere Handhabung der verarbeiteten Mischung ermöglicht, da die Abbindephase leicht verzögert einsetzt. Eine Kombination von Verzögerer/Beschleuniger und Stabilisator (Graph 4) führt jedoch nachweislich zu einer erheblich verbesserten Handhabung der verarbeiteten Gips-Zement-Trockenmischung, da die für die offene Verarbeitung der Mischung nötige Zeit erheblich verlängert wird, der Aushärteprozess dann aber beschleunigt abläuft und somit auch Risse und Spannungen im Material vermieden werden.

Erfindungsgemäß enthält deshalb die Gips-Zement-Trockenmischung den Verzögerer/ Beschleuniger in Kombination mit dem Stabilisator im Massenverhältnis Verzögerer/ Beschleuniger zu Stabilisator von 3:1 bis 1:3, bevorzugt 2:1 bis 1:2, ganz besonders bevorzugt 1:1.

Die erfindungsgemäße Kombination von Stabilisator und Verzögerer/Beschleuniger wirkt somit verzögernd in der Verarbeitungsphase; in der Abbindephase wirkt sie dagegen als Beschleuniger für den Hydrationsprozess.

Die Gips-Zement-Trockenmischung wird erfindungsgemäß mit 0,4 bis 0,9 m%, bevorzugt mit 0.5 bis 0,8 m%, besonders bevorzugt mit 0,67 m% Wasser bezogen auf die Gesamtmasse der Trockenmischung angerührt und ist sofort einsatzbereit. Bevorzugt wird sauberes Leitungswasser eingesetzt.

Dabei entsteht eine Masse, die auch als Mischung bezeichnet wird, die die erforderliche Viskosität besitzt, um im Gieß- und/ oder Spritzverfahren angewendet werden zu können.

Vorteilhaft können Fertigteilelemente zur Fertigung von Gebäuden durch einfaches Gießen der angerührten Masse in Formen oder durch Einpumpen in die Formen hergestellt werden. Weiterhin kann die aus der erfindungsgemäßen Gips-Zement-Trockenmischung hergestellte Masse im Spritzverfahren eingesetzt werden. Dies dient zum Beispiel bei der Herstellung von Gipsplatten, Leichtbausteinen, als Wärmedämmungsmaterial, als schalldämmender und feuerhemmender Putz und zur Herstellung von Gebäuden in der Stahl-Leichtbauweise.

Gegenstand der Erfindung ist ebenfalls eine gieß- bzw. spritzfähige Masse, enthaltend die erfindungsgemäße Gips-Zement-Trockenmischung und 0,4 bis 0,9 m%, bevorzugt 0.5 bis 0,8 m%, besonders bevorzugt 0,67 m% Wasser, bezogen auf die Gesamtmasse der Trockenmischung.

Vorteilhaft härtet die Masse nach einer längeren offenen Verarbeitungszeit schnell aus und behält dabei den Temperaturbereich für die Gips-/Zementaushärtung bei. Ein weiterer entscheidender Vorteil liegt darin, dass ein spezielles Dosieren z.B. über eine Dosieranlage und Hinzufügen von flüssigen Additiven vor Ort nicht nötig ist. Das ermöglicht eine wesentlich einfachere Verarbeitung der Mischung, als es mit wässrigen Mischungen, bei denen auch flüssige Additive eingesetzt werden, gegeben ist. Zum Anrühren und Abbinden der Mischung muss lediglich Wasser hinzugefügt werden.

Durch die einfache Verarbeitung ist vorteilhaft die in-situ-Herstellung der einsatzbereiten Masse gegeben. Durch diese vor-Ort-Herstellung entfallen hohe Transportkosten für eine fertig angerührte Masse, die ein viel höheres Gewicht aufweisen würde als die erfindungsgemäße Trockenmischung. Die Erfindung weist damit sowohl aus ökonomischen als auch aus ökologischen Gesichtspunkten heraus, erhebliche Vorteile gegenüber dem Stand der Technik auf.

Die Erfindung betrifft weiterhin Gebäudefertigteile, hergestellt aus der erfindungsgemäßen Gips-Zement-Trockenmischung mit deren vorteilhaften Ausgestaltungen.

Vorteilhaft sind die mit der erfindungsgemäßen Gips-Zement-Trockenmischung hergestellten Gebäudefertigteile erheblich leichter als herkömmliche Betonelemente; die Gewichtsersparnis beträgt bis zu 75% des Gewichts der üblichen Baustoffe. Damit können auch Leichtstahlbewehrungen als Formen eingesetzt werden. Das verringert wiederum die Transportkosten der Gebäudefertigteile erheblich. Zusätzlicher Effekt ist, dass erhebliche Kosteneinsparungen dadurch verursacht werden, dass Fundamente und Bodenplatten weniger Gewicht tragen müssen und dadurch Bewehrungen gespart werden können.

Ein weiterer entscheidender Vorteil liegt in der enorm hohen Feuerfestigkeit, die das ausgehärtete Material aufweist. Das Material kann in die Klasse A1 (nicht brennbar) eingeordnet werden. Es findet keine Rauchentwicklung statt.

Weiterer Vorteil ist, dass das Material trotz hoher Stabilität und Standhaftigkeit, speziell auch für Erdbebengebiete eingesetzt werden kann.

Zur Herstellung der Gebäudefertigteile wird die erfindungsgemäße Gips-Zement-Trockenmischung mit der entsprechenden Menge Wasser angerührt und zügig in vorgefertigte Formen gegossen, so dass die gegossene Wand keine nicht von der Masse bedeckte Lücken außer an den Stellen aufweist, die in der Form der Durchbrüche ausgebildet sind, z.B. für Fenster und Türen Wand-zu-Wand-Verbindungen, Wand-zur-Decke-Verbindungen und Wand-zum-Boden-Verbindungen. Dadurch entstehen keine Fugen und Wärmebrücken.

Bevorzugt bestehen die Formen aus Metall, Holz, Kunststoff oder z.B. auch Bambus. Die Formen werden liegend auf Produktionstischen verwendet. Es ist aber auch möglich, senkrecht stehende Formen für Schalungselemente zu verwenden.

Bei liegender Herstellungsweise können verschiedene Schichten in den Elementen erstellt werden und die Ausschalzeit reduziert sich erheblich. Beispielsweise kann ein 6 x 3 x 0,15 Meter großes Gebäudefertigteil bereits nach 7 Stunden ausgeschalt werden, während sonst bei herkömmlichen Baustoffen ein vergleichbares Gebäudeteil erst nach 24 Stunden ausgeschalt werden kann.

Vorteilhaft können während des Gießverfahrens Funktionselemente in die Gebäudefertigteile eingearbeitet werden. Zu den Funktionselementen zählen u.a. Fenster- und Türrahmen, Durchführungen für Medien, wie z.B. Wasser- und Elektrorohre oder Elemente zur Aufnahme von Gewichten, z.B. für WC-Aufhängungen.

Anhand des nachfolgenden Ausführungsbeispiels wird die Erfindung näher erläutert:
Es wird eine wässrige Gips-Zement-Mischung aus den folgenden Bestandteilen hergestellt:
330 kg CaSO₄·1/2H₂O, 110 kg Portlandzement CEM II - 32,5/52,5/42,5 GRAU/Weiß, 100 kg Sand (lokaler Bruchsand 0,25-2,00 mm), 1000 l extruded Polystyren (XPS) oder expanded Polystyren (EPS; mittlere Teilchengrösse 0,25 - 3 mm, recyceltes Bruchgranulat oder neu hergestelltes EPS, 0,54 kg Polypropylen-Fasern (Länge: 100Gew.-% 8 mm), Fließmittel (*BIOFRA 05,* Fa. H & B (Asia) Ltd., Hong Kong, Hong Kong, enthaltend 10 bis 25 m% Natriumdodecylsulfat und 60 bis 70 m% Kalkstein), Luftporenbildner (*BIOFRA L,* Fa. H & B (Asia), Ltd., Hong Kong, Hong Kong, enthaltend 10 bis 30 m% Natriumdodecyslulfat und 70 bis 90% Kalkstein), Verzögerer/Beschleuniger (*MYR B 36,* Fa. Marcusyros S.L., Estepona, Spain, enthaltend anionisches Polymer, wasserlöslich) und Stabilisator (*MYR PF 56,* Fa. Marcusyros S.L., Estepona, Spain, enthaltend Natriumtrimetaphosphat).

Alle Bestandteile werden bis zur Homogenität gemischt. Dieses Gemisch wird zur Lagerung in Säcke abgepackt.

Vor Ort wird das in Säcken abgefüllte Trockengemisch in die Misch-/Pump-/Spritzeinrichtung gefüllt und ca. 250 kg sauberes Leitungswasser zugemischt, um die notwendige Viskosität des Materials zu erreichen.

Die so erhaltene wässrige Gips-Zement-Mischung wird dann sofort mittels einer Pumpe oder Perestaltikpumpe in die Schalung eingebracht.

Die Mischung des Beispiels 1 wird beispielsweise für die Erstellung von Außen- und Innenwänden und Böden/Decken/Dachelementen beim monolithischen Hausbau nach der Stahl-, Holz-, Bambus- oder Kunststoffrahmen-Bauweise verwendet. Diese Fertigteile zeichnen sich durch ihr geringeres Gewicht und hohe Feuerfestigkeit aus.

Weiterhin wird die Mischung beispielsweise für die Herstellung von umweltresistenten Gartenmöbeln, Möbeln oder voluminöser Körper eingesetzt.

## Patentansprüche

1. Gips-Zement-Trockenmischung umfassend
- ein Bindemittel, das Calciumsulfat-Hemihydrat oder ein dieses zu mindestens 50 Gew.-% umfassenden Gemisch und hydraulischen Zement in einem Gewichtsverhältnis 5:1 bis 3:1 enthält,
- einen Zuschlagstoff, der ausgewählt ist aus zerkleinertem Holz, Plastik, Blähton, Perliten oder Schaumstoff oder einer Mischung dieser,
- Additive, enthaltend
- mindestens ein Fließmittel
- mindestens einen Luftporenbildner
- mindestens einen Stabilisator
- mindestens einen Verzögerer/Beschleuniger, d.h. einen Zusatz, der sowohl als Verzögerer als auch als Beschleuniger wirkt,
**dadurch gekennzeichnet, dass** die Additive in trockener Form vorliegen und der Massenanteil der Summe aller Additive an der Gesamtmasse der Trockenmischung <1% beträgt, dass der Stabilisator ausgewählt ist aus Fluorphosphaten oder kondensierten Phosphaten, dass der Verzögerer /Beschieuniger ein wasserlösliches anionisches Polymer ist und dass das Massenverhältnis von Stabilisator zu Verzögerer/Beschleuniger 3:1 bis 1:3 beträgt.

2. Gips-Zement-Trockenmischung nach Anspruch 1, **gekennzeichnet dadurch, dass** der Zuschlagstoff Schaumstoff ist, wobei das Gewichtsverhältnis Bindemittel zu Schaumstoff 15:1 bis 45:1 beträgt.

3. Gips-Zement-Trockenmischung nach Anspruch 2, **gekennzeichnet dadurch, dass** der Schaumstoff recyceltes expandiertes Polystyrol mit einer mittleren Teilchengröße von 1 bis 8 mm ist.

4. Gips-Zement-Trockenmischung nach einem der Ansprüche 1 bis 3, **gekennzeichnet dadurch, dass** das Fließmittel ein organisches Fließmittel ist.

5. Gips-Zement-Trockenmischung nach Anspruch 4, **gekennzeichnet dadurch, dass** das Fließmittel anionische Tenside enthält.

6. Gips-Zement-Trockenmischung nach einem der Ansprüche 1 bis 5, **gekennzeichnet dadurch, dass** der Luftporenbildner anionische Tenside enthält.

7. Gebäudefertigteile, hergestellt aus einer Gips-Zement-Trockenmischung nach Anspruch 1 bis 6.

8. Gebäudefertigteile nach Anspruch 7, **gekennzeichnet dadurch, dass** sie Funktionselemente, wie Fenster- und Türrahmen, oder Durchführungen für Medien oder Elemente zur Aufnahme von Gewichten aufweisen.

## Claims

1. Gypsum-cement dry mixture comprising
- a binding medium containing calcium sulfate hemihydrate or a mixture of at least 50% thereof by weight and a hydraulic cement in a weight ratio of 5:1 to 3:1
- an aggregate selected from comminuted wood, plastic, expanded clay, perlite, or a foam, or a mixture thereof
- additives, containing
- at least one plasticizer
- at least one air-entraining agent
- at least one stabilizer
- at least one retarder/accelerator; i.e., an additive that acts both as a retarder and an accelerator
**characterized by** the fact that the additives are present in dry form and the mass portion of the sum of all additives in the dry mixture amounts to < 1%, the stabilizer is selected from fluorophosphates or condensed phosphates, the retarder/accelerator is a water-soluble anionic polymer, and the mass ratio of stabilizer to retarder/accelerator amounts to 3:1 to 1:3.

2. Gypsum-cement dry mixture according to Claim 1, **characterized by** the fact that the aggregate is foam and the weight ratio of binding medium to foam is 15:1 to 45:1.

3. Gypsum-cement dry mixture according to Claim 2, **characterized by** the fact that the foam is recycled expanded polystyrene with an average particle size of 1 to 8 mm.

4. Gypsum-cement dry mixture according to one of the Claims 1 to 3, **characterized by** the fact that the plasticizer is an organic plasticizer.

5. Gypsum-cement dry mixture according to Claim 4, **characterized by** the fact that the plasticizer contain

6. Gypsum-cement dry mixture according to one of the Claims 1 to 5, **characterized by** the fact that the air-entraining agent contains anionic tensides.

7. Prefabricated building components manufactured from a gypsum-cement dry mixture according to Claim 1 to 6.

8. Prefabricated building components according to Claim 7, **characterized by** the fact that they feature functional elements, such as window and door frames, conduits for media, or elements for supporting of weights.

## Revendications

1. Mélange sec de ciment contenant du gypse comprenant
- un liant comprenant du sulfate de calcium hémihydrate ou un mélange comprenant au moins 50 % en poids de celui-ci et du ciment hydraulique dans un rapport de poids de 5 :1 à 3 :1
- un granulat choisi parmi du broyat de bois, du plastique, de l'argile expansée, de la perlite ou une mousse ou un mélange de ceux-ci,
- des additifs contenant
- au moins un fluidifiant
- au moins un agent aérateur
- au moins un stabilisateur
- au moins un retardateur/accélérateur, c'est-à-dire un additif agissant aussi bien en tant que retardateur qu'en tant qu'accélérateur,
**caractérisé par le fait que** les additifs sont présents sous forme sèche et la fraction massique de la somme de tous les additifs sur la masse totale du mélange sec est < 1 %, que le stabilisateur est choisi parmi des fluorophosphates ou des phosphates condensés, que le retardateur / accélérateur est un polymère anionique soluble dans l'eau
et que le rapport massique du stabilisateur par rapport au retardateur/accélérateur est de 3 : 1 à 1 :3.

2. Mélange sec de ciment contenant du gypse selon la revendication 1 **caractérisé par le fait que** le granulat est de la mousse, le rapport de poids du liant et de la mousse étant de 15:1 à 45:1.

3. Mélange sec de ciment contenant du gypse selon la revendication 2 **caractérisé par le fait que** la mousse est un polystyrène expansé avec une taille moyenne de particules de 1 à 8 mm.

4. Mélange sec de ciment contenant du gypse selon l'une des revendications 1 à 3 **caractérisé par le fait que** le fluidifiant est un fluidifiant organique.

5. Mélange sec de ciment contenant du gypse selon la revendication 4 **caractérisé par le fait que** le fluidifiant contient des tensides anioniques.

6. Mélange sec de ciment contenant du gypse selon l'une des revendications 1 à 5 **caractérisé par le fait que** l'agent aérateur contient des tensides anioniques.

7. Éléments de construction préfabriqués fabriqués à partir d'un mélange de ciment contenant du gypse selon la revendication 1 à 6.

8. Éléments de construction préfabriqués selon la revendication 7 **caractérisés par le fait qu'**ils présentent des éléments fonctionnels tels que des montant de fenêtres et de portes, ou des passages pour les fluides ou des éléments pour la fixation de poids.
